# EUROPÄISCHE PATENTSCHRIFT

(11) **EP 1 432 002 B1**
(45) Veröffentlichungstag und Bekanntmachung des Hinweises auf die Patenterteilung: **23.04.2008**
(21) Anmeldenummer: 03028801.3
(22) Anmeldetag: 13.12.2003
(51) Int. Cl.: H01H 71/12, H02H 3/33, H01H 83/04

(54) **Schutzvorrichtung**
Protective device
Dispositif de protection

(30) Priorität: 16.12.2002 DE 20219429 U; 24.07.2003 DE 20311394 U
(43) Veröffentlichungstag der Anmeldung: 23.06.2004
(73) Patentinhaber: Goethe, Stefan, 49525 Lengerich (DE)
(72) Erfinder: Goethe, Stefan, 49525 Lengerich (DE)
(74) Vertreter: Busse, Harald F.W.

(56) Entgegenhaltungen:
- EP-A- 0 264 314
- EP-A- 1 079 465
- DE-A1- 4 337 254
- DE-A1- 4 432 643
- DE-U1- 9 212 800

## Beschreibung

Die Erfindung betrifft eine elektrische Schutzvorrichtung mit zumindest einem Fehlerstromschutzschalter, nach dem Oberbegriff des Anspruchs 1 wie in der DE-U-9 212 800 sowie nach dem Oberbegriff des Anspruchs 10.

Es ist bekannt, zur Absicherung von elektrischen Anlagen, etwa in Haushalten, Fahrzeugen oder Gewerbe- und Produktionseinheiten, Fehlerstromschutzschalter, häufig auch als FI-Schalter bezeichnet, vorzusehen, die bei einem Ungleichgewicht von ein- und ausgehenden elektrischen Strömen, also dem Vorhandensein eines Fehlerstroms, auslösen und die damit abgesicherte Anlage spannungsfrei schalten. Derartige Fehlerstromschutzschalter haben eine sehr kurze Ansprechzeit und können somit im Gefahrenfall besonders schnell schalten. Sie können damit eine hohe Sicherheit für Benutzer der elektrischen Anlage bieten.

Es ist weiterhin bekannt, einem Fehlerstromschutzschalter einen Prüfschaltkreis mit einem manuell bedienbaren Betätigungs-organ, etwa einer Drucktaste, zuzuordnen, um die Funktion des Fehlerstromschutzschalters kontrollieren zu können. Betätigungsorgan und Prüfschaltkreis sind üblicherweise mit in das Gehäuse des Fehlerstromschutzschalters integriert und fest miteinander verbunden, was die Flexibilität einschränkt. Ein derartiges Gehäuse kann etwa in einem Schaltschrank an einer sogenannten Hutschiene montierbar sein.

Eine manuelle Prüfung ist wegen der Integration in das Gehäuse nur am Einbauort des Fehlerstromschutzschalters, etwa einem Schaltsschrank, vornehmbar, und wird meist nur - falls überhaupt - in sehr großen Zeitabständen von einem Elektriker durchgeführt. Die Funktionsfähigkeit eines Fehlerstromschutzschalters ist daher häufig über lange Zeiträume nicht bekannt.

Um weitere verschiedene Geräte und Schaltkreise abzusichern, sind neben dem Fehlerstromschutzschalter in einem Schaltschrank häufig eine Vielzahl von Einzelabsicherungen enthalten, die nicht die kurzen Ansprechzeiten des Fehlerstromschutzschalters bieten und die jeweils in passender Größe bereitgestellt werden müssen.

Der Erfindung liegt das Problem zugrunde, die Vorteile eines Fehlerstromschutzschalters besser als bisher ausnutzen zu können.

Die Erfindung löst dieses Problem durch eine Schutzvorrichtung mit den Merkmalen des Anspruchs 1 und durch eine Schutzvorrichtung mit den Merkmalen des Anspruchs 10, die einzeln oder in Kombination miteinander verwirklicht sein können. Hinsichtlich vorteilhafter Ausgestaltungen der Erfindung wird auf die weiteren Ansprüche 2 bis 9 verwiesen.

Erfindungsgemäß ist mit der Ausbildung nach Anspruch 1 die Möglichkeit geschaffen, den Fehlerstromschutzschalter einfach um eine Vielzahl von Einsatzmöglichkeiten zu erweitern. Durch die Parallelschaltung der zusätzlichen Auslösemöglichkeit(en) kann oder können diese genau wie eine bekannte von Hand zu bedienende Taste den Prüfschaltkreis betätigen und somit den Fehlerstromschutzschalter auslösen. Eine solche Auslöseeinheit kann eine Vielzahl von möglichen Funktionen erfüllen. Durch das zusätzliche Vorsehen zumindest einer lösbaren mechanischen Abstützung an dem Gehäuse des Fehlerstromschutzschalters und/oder des Prüfschaltkreis kann oder können die weitere(n) Auslöseeinheit(en) einfach an den Fehlerstromschutzschalter angesetzt werden.

Die Zuverlässigkeit der Verbindung der Teile aneinander kann insbesondere durch eine formschlüssige Verbindung der Abstützung und der Halteorgane gesichert werden.

Wenn dabei ein Schnellverschluß, etwa eine Steck- oder Schwalbenschwanzverbindung, vorgesehen ist, ist die Montage und Demontage, etwa auch zum Wechsel unterschiedlicher Auslöseeinheiten, erheblich beschleunigt und auch ohne Werkzeug möglich.

Dabei ergibt sich eine besondere Vereinfachung sowohl der Herstellung der Teile als auch der Montage vor Ort, wenn die mechanischen Verbindungsteile gleichzeitig auch zur elektrischen Kontaktierung dienen. Beispielsweise kann ein einfaches Aneinanderstecken der Teile dann den einzigen erforderlichen Montageschritt ausbilden und sowohl ihren mechanischen Halt als auch ihre elektrische Kontaktierung bewirken.

Eine Anordnung von Buchsen in dem Gehäuse des Fehlerstromschutzschalters stellt vorteilhaft sicher, daß diese spannungsführend für die anzusetzende Auslöseeinheit sein können, ohne daß die Gefahr besteht, daß spannungsführende Teile berührt werden könnten.

Insbesondere ist es günstig für die Anordnung mehrerer Auslöseeinheiten, wenn diese bezüglich ihrer Verbindungsmittel jeweils gleichartig ausgebildet sind und beispielsweise an einer Seite Buchsen und an der gegenüberliegenden Seite herausragende komplementäre Kontakt- und/oder Haltestifte aufweisen. Ein Sortiment verschiedener Auslöseeinheiten kann vorgehalten werden und so eine Anpassung an wechselnde Anforderungen auch bei bestehenden elektrischen Anlagen jederzeit einfach vorgenommen werden.

Mit der Erfindung kann vorteilhaft etwa ein Rauchmelder im Schaltschrank integriert werden, der bei häufig unbemerkten Schwelbränden in der elektrischen Anlage den FI-Schalter auslöst. Auch kann eine weitere Auslöseeinheit vorteilhaft durch einen Funkempfänger gebildet sein, der Signale verschiedener, räumlich verteilter Melder empfängt und gegebenenfalls den Fehlerstromschutzschalter auslöst.

Eine Auslöseeinheit kann erfindungsgemäß nach Anspruch 10 von einem Näherungsschalter gebildet sein. Damit ist erreicht, daß etwa dann, wenn eine Person den Schaltschrank öffnet, automatisch der FI-Schalter auslöst und somit die gesamte elektrische Anlage spannungsfrei schaltet. Für das Wiedereinschalten kann beispielsweise eine Funkempfänger vorgesehen sein, der nur dann das Wiedereinschalten ermöglicht, wenn die Person einen hinreichenden Sicherheitsabstand vom Schaltschrank einhält. Damit ist die Gefahr elektrischer Unfälle von Laien erheblich vermindert. Für Fachkräfte kann eine Blockierung des Näherungsschalters vorhanden sein.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: einen schematischen Schaltplan des Prüfstromkreises eines Fehlerstromschutzschalters mit eigener Anschlußmöglichkeit an verschiedene Leitungen und zusätzlicher paralleler Anschlußmöglichkeit für zumindest eine weitere Auslöseeinheit,
- Fig. 2: den Schaltplan nach Fig. 1 bei Anschluß des Prüfstromkreises an eine erste Leitung einer zweipoligen Verschaltung des FI-Schalters,
- Fig. 3: den Schaltplan nach Fig. 1 bei Anschluß des Prüfstromkreises an eine Leitung einer vierpoligen Verschaltung des FI-Schalters,
- Fig. 4: ein Schaltbild ähnlich wie Fig. 1 mit zusätzlich angedeuteten zwei weiteren parallelen Auslöseeinheiten,
- Fig. 5: eine schematische Ansicht des Gehäuses des Fehlerstromschutzschalters in montierter Stellung mit gestrichelt eingezeichneten Abstützungen für eine Auslöseeinheit,
- Fig. 6: eine ähnliche Ansicht wie Fig. 5 eines Gehäuses einer Auslöseeinheit,
- Fig. 7: eine perspektivische Ansicht des montierten Fehlerstromschutzschalters mit einem angesetzten Modul einer Auslöseeinheit.

Die insgesamt mit 1 bezeichnete elektrische Schutzvorrichtung umfaßt zumindest einen Fehlerstromschutzschalter 2, der in einem Gehäuse 3, etwa aus Kunststoff und/oder Aluminium, angeordnet ist.

In dem Gehäuse 3 ist des weiteren ein Prüfschaltkreis 4 mit einen Vorwiderstand 5 enthalten, der mit einem manuell auszulösenden Betätigungsorgan 6, hier einer Drucktaste, in Reihe geschaltet ist. Alternativ kann - nicht gezeichnet - der Prüfschaltkreis 4 auch in einem eigenen Gehäuse 3 angeordnet sein, das mit dem ersten Gehäuse 3 des Fehlerstromschutzschalters 4 verbunden ist. Parallel zur Drucktaste 6 sind zwei elektrische Kontakte 7, 8 abgegriffen und durch Ausnehmungen 9, 10 des Gehäuses 3 zugänglich. Der Kontakt 7 ist zwischen dem Vorwiderstand 5 und dem Betätigungsorgan 6 abgezweigt. Es ist daher für die Kontakte 7, 8 gleichwertig, an welchen Leiter die Enden 11, 12 des Prüfschaltkreises 4 angeschlossen sind.

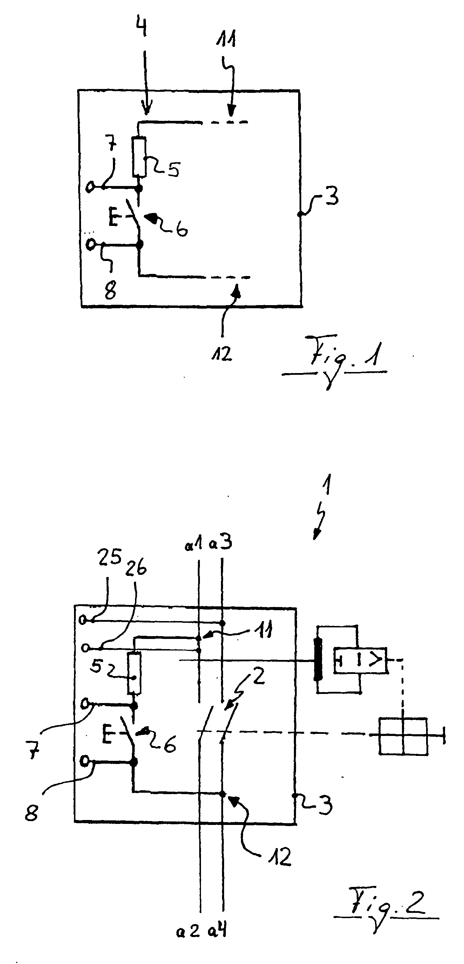

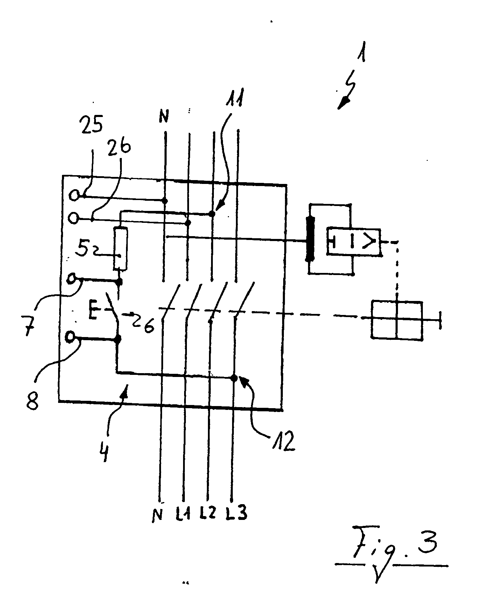

In den Figuren 2 und 3 sind beispielhaft diese Enden 11, 12 an unterschiedlichen Leiterbahnen a1, a3 im zweipoligen Ausführungsbeispiel nach Fig. 2 bzw. an L2 im vierpoligen Ausführungsbeispiel nach Fig. 3 angeschlossen. Trotz der unterschiedlichen Anschlüsse herrschen im Prüfschaltkreis 4 und somit auch an den parallel zum Betätigungsorgan 6 liegenden Kontakten 7, 8 jeweils gleiche Verhältnisse.

Im Ausführungsbeispiel sind die elektrischen Kontakte 7, 8 als metallische Buchsen ausgeführt, die durch die Ausnehmungen 9, 10 des Gehäuses 3 zugänglich sind. Sie dienen gleichzeitig als mechanische Abstützungen für komplementäre Kontakt- und Haltestifte 13, 14 von Auslöseeinheiten 15, 16, 17. Dies ist nicht zwingend. Es können beispielsweise auch zwei Steckverbindungen zur elektrischen Kontaktierung und ein oder zwei weitere zur mechanischen Abstützung vorgesehen sein. Die Doppelfunktion von mechanischer und elektrischer Verbindung zeigt jedoch die oben genannten Vorteile bei Herstellung (Materialersparnis) und Montage (Einfachheit) der Bauteile. Mit der zu den Buchsen 7, 8 komplementären Ausbildung der Halteorgane 13, 14 kann ein formschlüssiger Eingriff erreicht werden, der etwa durch zusätzliche federbelastete Rasthaken oder sonstige Auszugssperren gesichert sein kann. Die mechanische Verbindung kann wie ein Schnellverschluß ein Modul mit einem Gehäuse 18 zumindest einer Auslöseeinheit 15, 16, 17 an dem Gehäuse 3 des Fehlerstromschutzschalters 2 halten. Ein gesondertes Verkabeln von losen Drähten kann in jedem Fall bei der Anmontage eines Moduls entbehrlich sein.

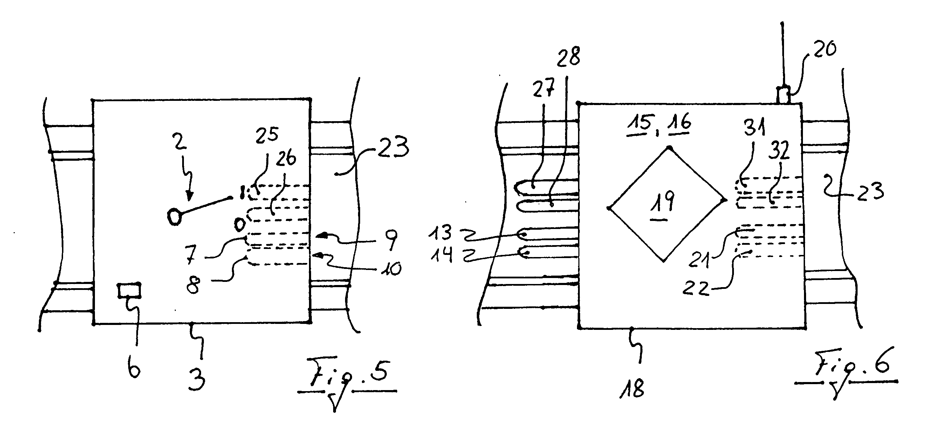

Ein ansetzbares Modul zumindest einer Auslöseeinheit 15, 16, 17 umfaßt jeweils ein Gehäuse 18, wobei auch mehrere Auslöseeinheiten sich ein gemeinsames Gehäuse teilen können (Fig. 6). Eine erste Auslöseeinheit 15 kann beispielsweise als Detektor für ein oder mehrere Gas(e) ausgebildet sein und hierfür ein Eintrittsfenster 19 umfassen. In Fig. 6 soll eine zweite Auslöseeinheit 16 im selben Gehäuse 18 angeordnet sein und einen Funkempfänger 20 umfassen. Damit kann die zweite Auslöseeinheit 16 von mehreren dezentralen Signalgebern, zum Beispiel Rauchmeldern, angesteuert werden und im Auslösefall den FI-Schalter 2 spannungsfrei schalten. Eine dritte Auslöseeinheit 17 kann etwa einen Temperatur- und/oder Druckfühler, einen Feuchtigkeitssensor oder weiteren, auf ein anderes Gas sensitiven Sensor, einen Näherungsschalter mit dem oben beschriebenen Zweck oder einen beliebigen anderen Sensor umfassen. Jeder Sensor kann über eine Blockierungsmöglichkeit verfügen, mit der ein unbeabsichtigtes Auslösen vermieden werden kann, z. B. bei der Montage, bei der erst nach Herstellung des Kontakts mit dem FI-Schalter 2 die Blockierung aufgehoben wird.

Je nach Bedarf kann eine Auslöseeinheit 15, 16, 17 eine Spannungsversorgung über beispielsweise ebenfalls als Buchsen ausgebildete Kontakte 25, 26 im Gehäuse 3 des FI-Schalters 2 erhalten (Fig. 2, Fig. 3, Fig. 5). Über den Eingriff von etwa als Stiften ausgebildeten Kontakten 27, 28 kann so die Versorgungsspannung für die jeweilige Auslöseeinheit 15, 16, 17 abgegriffen werden kann.

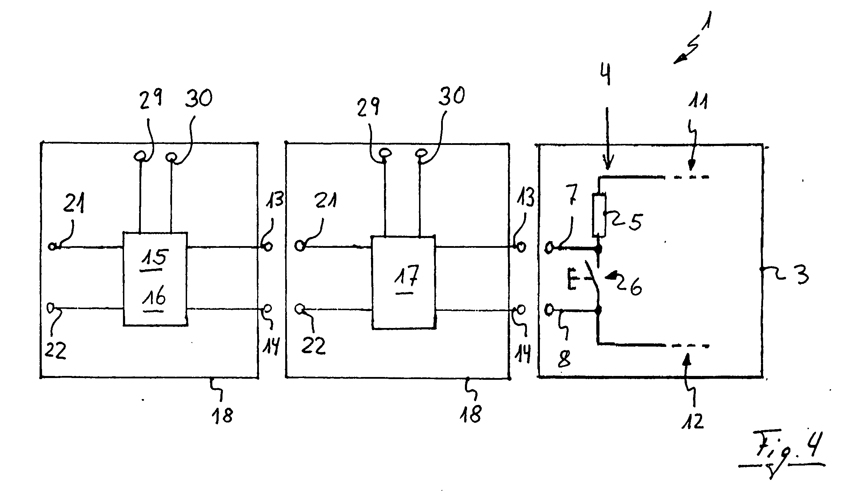

Alternativ können auch die einzelnen Gehäuse 18 der Auslöseeinheiten 15, 16, 17 jeweils mit Kontakten 29, 30 (Fig. 4) versehen sein und hierüber an eine externe, nicht gezeichnete Spannungsquelle anschließbar sein.

Die Gehäuse 18 der Auslöseeinheiten 15, 16, 17 sind modular ausgebildet und daher gegeneinander austauschbar sowie in verschiedenen Anzahlen und Reihenfolgen montierbar. Hierfür weist beispielsweise jedes Gehäuse 18 an einer Seite zwei Stifte 13, 14 als Halteorgane und auf der gegenüberliegenden Seite komplementäre Aufnahmen 21, 22 zur Halterung von Stiften 13, 14 weiterer Gehäuse von Sensoreinheiten, Schaltorganen oder Meldern 15, 16, 17 auf. Die Aufnahmen 21, 22 sind gleichartig zu den Kontakten 7, 8 in den Ausnehmungen 9, 10 des Gehäuses 3 ausgebildet. Dadurch und durch die parallele Verschaltung kann ein Modul von zumindest einer Auslöseeinheit 15, 16, 17 wahlweise an das Gehäuse 3 oder an ein Gehäuse 18 einer anderen Auslöseeinheit montiert werden. Auch die Reihenfolge des Ansetzens mehrerer Auslöseeinheiten hintereinander ist daher beliebig. Sie liegen alle parallel zum Betätigungsorgan 6 des Prüfschaltkreises 4. Sofern das Gehäuse 3 des FI-Schalters 2 zum Beispiel beidseits Kontakte 7,8 aufweist, können auch Module an beiden Seiten dieses Gehäuses 3 angesetzt werden.

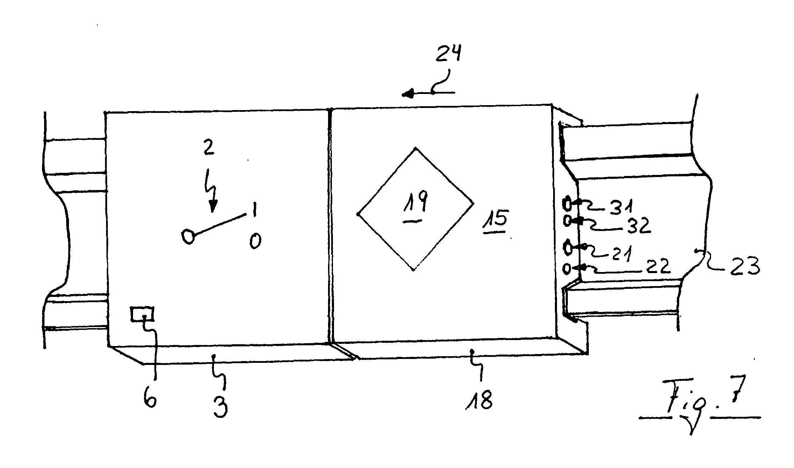

Im Falle einer Spannungsversorgung der Auslöseeinheiten 15, 16, 17 über das Gehäuse 3 des FI-Schalters 2 kann ein jedes Gehäuse 18 analog zu den Kontakten 25, 26 des Gehäuses 3 auch mit weiteren Ausnehmungen 31, 32 versehen sein, in die zur Weitergabe der Versorgungsspannung entsprechende komplementäre Stiftkontakte 27, 28 eines weiteren Gehäuses 3 eingreifen können (Fig. 6, Fig. 7). Ebenso ist es möglich, daß die Kontakte 21 und 31 bzw. 22 und 32 jeweils in einer gemeinsamen Buchse liegen, in die entsprechende komplementäre doppelt belegte Steckkontakte mit konzentrischen, gegeneinander isolierten Leitern eingreifen können.

Bei Verwendung einer Hutschiene 23 als Halterung für die Gehäuse 3, 18 (Fig. 5 bis Fig. 7) können die jeweiligen Gehäuse 3, 18 einfach auf diese Schiene aufgesetzt und dann das Gehäuses 18 in Richtung des Pfeils 24 an das Gehäuse 3 geschoben werden, wodurch die Stifte 13, 14, 27, 28 in Ausnehmungen mit Kontakten 9, 10, 25, 26 bzw. 21, 22, 31, 32 mechanisch eingreifen und gleichzeitig elektrisch kontaktiert werden.

Es versteht sich, daß zusätzlich auch externe Sensoreinheiten, Schalter, Melder oder dergleichen über beispielsweise die gezeigten Anschlußbuchsen 7, 8 bzw. 21, 22 oder noch weitere, nicht eingezeichnete Kontakte eines Gehäuses 3 oder 18 angeklemmte Kabel parallel angeschlossen werden und somit eine Fernauslösung bewirken können.

## Patentansprüche

1. Elektrische Schutzvorrichtung (1) mit einem Fehlerstromschutzschalter (2) und zumindest einem über ein Betätigungsorgan (6) manuell auslösbaren Prüfschaltkreis (4) für den Fehlerstromschutzschalter, wobei der Fehlerstromschutzschalter (2) und/oder der Prüfschaltkreis (4) jeweils in einem Gehäuse (3) angeordnet sind,
**dadurch gekennzeichnet,**
**daß** dem Gehäuse (3) zumindest eine lösbare mechanische Abstützung (9;10) einer elektrisch parallel zum Betätigungsorgan (6) anschließbaren Auslöseeinheit (15; 16; 17), die einen Gassensor, einen Rauchsensor, einen optischen Sensor, einen Druckfühler, einen Feuchtigkeits- oder Temperaturfühler oder einen Funkempfänger (20) umfaßt, für den Prüfschaltkreis (4) zugeordnet ist.

2. Schutzvorrichtung nach Anspruch 1,
**dadurch gekennzeichnet,**
**daß** die mechanische Abstützung (9; 10) zur formschlüssigen Verbindung mit Halteorganen (13;14) der Auslöseeinheit(en) (15;16;17) ausgebildet ist.

3. Schutzvorrichtung nach einem der Ansprüche 1 oder 2,
**dadurch gekennzeichnet,**
**daß** die Verbindung (9,10;13,14) des Gehäuses (3) des Fehlerstromschutzschalters (2) und der Auslöseeinheit(en) (15;16;17) nach Art eines Schnellverschlusses ausgebildet ist.

4. Schutzvorrichtung nach einem der Ansprüche 1 bis 3,
**dadurch gekennzeichnet,**
**daß** die mechanische Abstützung (9,10;13,14) in Doppelfunktion zur elektrischen Kontaktierung (7;8) dient.

5. Schutzvorrichtung nach einem der Ansprüche 1 bis 4,
**dadurch gekennzeichnet,**
**daß** die mechanische Abstützung in das Gehäuse weisende Buchsen (9;10) zur Aufnahme komplementärer Stifte (13;14) der Auslöseeinheit(en) (15; 16; 17) aufweist.

6. Schutzvorrichtung nach einem der Ansprüche 1 bis 5,
**gekennzeichnet durch**
ein Sortiment von bezüglich seiner mechanischen Halteorgane (13;14) gleichartigen Auslöseeinheiten (15;16;17).

7. Schutzvorrichtung nach Anspruch 6,
**dadurch gekennzeichnet,**
**daß** jede Auslöseeinheit sowohl mit Halteorganen (13;14) als auch mit komplementären Abstützungen (21;22) entsprechend denen (9;10) des Gehäuses (3) des Fehlerstromschutzschalters (2) versehen ist.

8. Schutzvorrichtung nach einem der Ansprüche 1 bis 7,
**dadurch gekennzeichnet,**
**daß** die Auslöseeinheiten (15;16;17) zueinander bezüglich ihrer mechanischen Ausgestaltung ähnliche Gehäuse (18) aufweisen und jeweils modular ausgebildet sind.

9. Schutzvorrichtung nach einem der Ansprüche 1 bis 8,
**dadurch gekennzeichnet,**
**daß** der Prüfschaltkreis (4) zumindest einen in Reihe mit dem Auslöseorgan (6) geschalteten Vorwiderstand (5) umfaßt und ein elektrischer Anschluß (7) für die parallele Auslöseeinheit (15;16;17) zwischen dem Vorwiderstand (5) und dem Betätigungsorgan (6) und ein zweiter elektrischer Anschluß (8) an dem dem Vorwiderstand (5) abgewandten Ende des Betätigungsorgans (6) angeordnet ist.

10. Elektrische Schutzvorrichtung (1) mit einem in einem Gehäuse (3) angeordneten Fehlerstromschutzschalter (2) und zumindest einem über ein Betätigungsorgan (6) manuell auslösbaren Prüfschaltkreis (4) für den Fehlerstromschutz-schalter (2), insbesondere nach einem der Ansprüche 1 bis 9,
**dadurch gekennzeichnet,**
**daß** dem Fehlerstromschalter (2) zumindest ein elektrisch parallel zum Betätigungsorgan (6) anschließbarer Näherungsschalter zugeordnet ist, der bei Annäherung einer Person an die elektrische Schutzvorrichtung (1) die so abgesicherte elektrische Anlage spannungsfrei schaltet.

## Claims

1. An electrical protection device (1) with a residual current circuit breaker (2) and at least one test circuit (4) for the residual current circuit breaker that can be manually operated via an actuator (6), wherein the residual current circuit breaker (2) and/or the test circuit (4) are each arranged in a housing (3),
**characterized in that**
the housing (3) has allocated to it for the test circuit (4) at least one detachable mechanical supporting element (9; 10) of a tripping unit (15; 16; 17) that can be electrically connected parallel to the actuator (6) and consists of a gas sensor, a smoke sensor, an optical sensor, a pressure sensor, a moisture or temperature sensor or a radio receiver (20) .

2. The protection device according to claim 1, **characterized in that** the mechanical supporting element (9, 10) is designed for the keyed connection to mounting elements (13; 14) of the tripping unit(s) (15; 16; 17).

3. The protection device according to one of claims 1 or 2, **characterized in that** the connection (9, 10; 13, 14) of the housing (3) for the residual current circuit breaker (2) and tripping unit(s) (15; 16; 17) is designed as a kind of quick-release lock.

4. The protection device according to one of claims 1 to 3, **characterized in that** the mechanical supporting element (9, 10; 13, 14) has a dual function relative to the electrical contacting (7; 8)

5. The protection device according to one of claims 1 to 4, **characterized in that** the mechanical supporting element has bushings (9; 10) pointing into the housing to hold complementary pins (13; 14) of the tripping unit(s) (15; 16; 17) .

6. The protection device according to one of claims 1 to 5, **characterized by** an assortment of tripping units (15; 16; 17) that are similar in terms of their mechanical mounting elements (13; 14).

7. The protection device according to claim 6, **characterized in that** each tripping unit (15; 16; 17) is provided with both mounting elements (13; 14) and complementary supporting elements (21; 22) corresponding to those (9; 10) of the housing (3) of the residual current circuit breaker (2) .

8. The protection device according to one of claims 1 to 7, **characterized in that** the tripping units (15; 16; 17) each have a similar housing (3) in terms of its mechanical configuration (18), and are each modular.

9. The protection device according to one of claims 1 to 8, **characterized in that** the test circuit (4) encompasses at least one series resistor (6) connected in series with the tripping element (6) and an electrical connection (7) for the parallel tripping unit (15; 16; 17) between the series resistor (5) and the actuator (6) and a second electrical connection (8) on which the end of the actuator (6) facing away from the series resistor (5) .

10. An electrical protection device (1) with a residual current circuit breaker (2) arranged in a housing (3) and at least one test circuit (4) for the residual current circuit breaker (2) that can be manually operated via an actuator (6), in particular according to one of claims 1 to 9, **characterized in that** the residual current circuit breaker (2) has allocated to it at least one proximity switch that can be electrically connected parallel to the actuator (6) and de-energizes the electrical system secured in this way as a person approaches the electrical protection device (1).

## Revendications

1. Dispositif de protection électrique (1) comportant un disjoncteur différentiel (2) et au moine un circuit de contrôle (4) du disjoncteur différentiel, déclenchable manuellement par l'intermédiaire d'un organe de commande (6), le disjoncteur différentiel (2) et/ou le circuit de contrôle (4) étant respectivement disposée dans un boîtier (3),
**caractérisée en ce qu'**
au moins un élément d'appui mécanique (9 ; 10) amovible d'une unité de déclenchement (15 ; 16 ; 17) du circuit de contrôle (4), comprenant un capteur de gaz, un capteur de fumée, un capteur optique, une sonde de pression, une sonde d'humidité ou de température ou un récepteur radio (20) apte à être raccordée électriquement parallèlement à l'organe de commande (6), est associé au boîtier (3).

2. Dispositif de protection selon la revendication 1, **caractérisée en ce que**, pour obtenir une liaison de forme, l'appui mécanique (9 ; 10) comporte des organes de maintien (13 ; 14) de l'unité ou des unités de déclenchement (15 ; 16 ; 17).

3. Dispositif de protection selon l'une quelconque des revendications 1 ou 2, **caractérisé en ce que** la liaison (9, 10 ; 13, 14) du boîtier (3) du disjoncteur différentiel (2) et de l'unité ou des unités de déclenchement (15 ; 16 ; 17) est du type attache rapide.

4. Dispositif de protection selon l'une quelconque des revendications 1 à 3, **caractérisé en ce que** l'appui mécanique (9, 10 ; 13, 14) sert, en double fonction, à la mise en contact électrique (7 ; 8).

5. Dispositif de protection selon l'une quelconque des revendications 1 à 4, **caractérisé en ce que** l'appui mécanique présente des prises femelles (9 ; 10) orientées vers l'intérieur du boîtier et destinées à recevoir des broches complémentaires (13 ; 14) des unités de déclenchement (15 ; 16 ; 17).

6. Dispositif de protection selon l'une quelconque des revendications 1 à 5, **caractérisé par** un assortiment d'unités de déclenchement (15 ; 16 ; 1.7) identiques quant à ses organes de maintien mécaniques (13 ; 14).

7. Dispositif de protection selon la revendication 6, **caractérisé en ce que** chaque unité de déclenchement est munie d'organes de maintien (13 ; 14) et d'éléments d'appui complémentaires (21 ; i 22) correspondant à ceux (9 ; 10) du boîtier (3) du disjoncteur différentiel (2).

8. Dispositif de protection selon l'une quelconque des revendications 1 à 7, **caractérisé en ce que**, quant à leur configuration mécanique, les unités de déclenchement (15; 16 ; 17) présentent des boîtiers similaires (18) entre elles et sont réalisées respectivement de manière modulaire.

9. Dispositif de protection selon l'une quelconque des revendications 1 à 9, **caractérisé en ce que** le circuit de contrôle (4) comprend au moins une résistance série (5) montée en série avec l'organe de déclenchement (6) et **en ce qu'**une borne électrique (7) destinée à l'unité de déclenchement (15 ; 16 ; 17) parallèle est disposé entre la résistance série (5) et l'organe de commande (6), et **en ce qu'**une seconde borne électrique (8) est disposée au niveau de l'extrémité de l'organe de commande (6) opposée à la résistance (5).

10. Dispositif de protection électrique (1) comportant un disjoncteur différentiel (2) et au moins un circuit de contrôle (4) du disjoncteur différentiel (2) déclenchable manuellement par l'intermédiaire d'un organe de commande (6), notamment selon l'une quelconque des revendications 1 à 9, **caractérisé en ce qu'**au moins un détecteur de proximité apte à être raccordé électriquement parallèlement à l'organe de commande (6) est associé au disjoncteur différentiel (2), et qui, à l'approche d'une personne du dispositif de protection électrique (1), met hors tension l'installation électrique ainsi protégée.
